# EUROPEAN PATENT APPLICATION

(11) **EP 1 178 195 A2**
(43) Date of publication of application: **06.02.2002**
(21) Application number: 01112578.8
(22) Date of filing: 23.05.2001
(51) Int. Cl.: F02C 3/36, F02C 1/04

(54) **Gas turbine system**

(30) Priority: 03.08.2000 JP 2000235847; 13.03.2001 JP 2001070498
(71) Applicant: Mitsubishi Heavy Industries, Ltd., Tokyo (JP)
(72) Inventor: Mandai, Shigemi, c/oTakasago R&DCenter, Mitsubishi, Takasago-shi, Hyogo-ken (JP); Mori, Hidetaka, c/oTakasago R&DCenter, Mitsubishi, Takasago-shi, Hyogo-ken (JP); Sugishita, Hideaki, c/oTakasago R&DCenter, Mitsub., Takasago-shi, Hyogo-ken (JP); Uchi, Yasuhiro, c/oGen. Mach & Spec. Veh. Headqua., Kanagawa-ken (JP); Yoshida, Shirou, c/oGen. Mach & Spec. Veh. Headqua, Kanagawa-ken (JP)
(74) Representative: Henkel, Feiler, Hänzel

(57) **Abstract**

Gas turbine system is constructed such that no fuel gas compressor is used and a turbine is operated at low temperature so that a life of the system is elongated and the safety is enhanced. Air compressed at a compressor (11) of about 200°C enters a heat exchanger (12) to be heated by combustion gas to about 760 to 900°C to enter the turbine (13) and to work to rotate a generator (15). Exhaust air of the turbine (13) of which temperature is lowered to about 500 to 750°C is supplied into a combustor (14) for fuel combustion to generate high temperature combustion gas of about 800 to 950°C. This combustion gas enters the heat exchanger (12) to heat the air from the compressor (11). The air is heated by the high temperature combustion gas with no fuel gas compressor being used and the turbine is operated by the lower temperature air as compared with a conventional case. Hence, the system is made less expensive, the life is elongated and the safety is enhanced.

## Description

### BACKGROUND OF THE INVENTION

### Field of the Invention

The present invention relates generally to a gas turbine system and more particularly to a gas turbine system which is appropriate for use as what is called a microturbine system of a comparatively small type of 25 to 100 kw class and which is less expensive and still has a high efficiency to be used as a power source or heat source of air conditioning or the like in a store or building.

### Description of the Prior Art

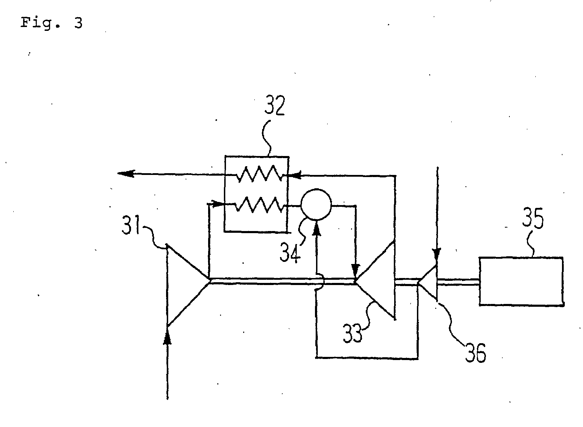

Fig. 3 is a diagram of a microturbine system in the prior art. In Fig. 3, numeral 31 designates a compressor, numeral 32 designates a heat exchanger for transferring heat to compressed air, numeral 33 designates a turbine, numeral 34 designates a combustor, numeral 36 designates a fuel gas compressor for compressing fuel gas to be supplied into the combustor 34 and numeral 35 designates a generator. The prior art microturbine system comprises the mentioned components 31 to 36.

In the microturbine system mentioned above, compressed air compressed to 4 to 5 ata at the compressor 31 is led into the heat exchanger 32 to be heat-exchanged with turbine exhaust gas to be preheated to about 600 °C. The high temperature air so compressed and preheated is supplied into the combustor 34 for burning the fuel gas compressed at, and sent from, the fuel gas compressor 36. The fuel gas, that is pressurized to about 5 ata at the fuel gas compressor 36, burns with the air at the combustor 34 to become a high temperature combustion gas of about 900 to 950°C. This high temperature combustion gas flows into the turbine 33 and expands to work for rotating the generator 35. Exhaust gas coming out of the turbine 33, of which temperature is lowered to about 650°C, enters the heat exchanger 32 for preheating the air coming from the compressor 31, as mentioned above. Then, the exhaust gas, of which temperature is lowered to about 250°C, is discharged outside of the system.

In the mentioned microturbine system in the prior art, while there is needed the fuel gas compressor 36 for pressurizing the fuel to about 5 ata, this fuel gas compressor 36 is expensive. This compressor is of such a small type as being unable to afford sufficient clearances between rotational portions and stationary portions and requires a high accuracy of the device. This results in the less reliability and short life of the device, so that a replacement of the device is needed at nearly every half year interval. Moreover, the power required for compressing the fuel is considerably large and this power is taken from the rotational force of the turbine 33, as the fuel gas compressor 36 is connected coaxially to the turbine 33. This also results in the reduction of the efficiency of the microturbine system.

### SUMMARY OF THE INVENTION

In view of the problem in the prior art, therefore, it is an object of the present invention to provide a gas turbine system in which no expensive and less reliable fuel gas compressor is used, a turbine is operated only by air and inlet temperature of the turbine is made lower as well as temperature in a duct or the like connecting to the turbine is also made lower so that life of the system may be elongated, and which employs such a system that the air for operating the turbine is heated at a heat exchanger using a high temperature gas generated by fuel combustion at a combustor, and by which a high NOx reduction effect can be obtained.

In order to achieve the mentioned object, the present invention provides means of the following (1) to (4);
(1) A gas turbine system characterized in comprising a compressor for compressing air; a heat exchanger for heating the air discharged from the compressor; a turbine driven by expansion of the air discharged from the compressor and heated at the heat exchanger for working to rotate a generator; a combustor for burning fuel with the air discharged from the turbine for generating a high temperature combustion gas; and a system in which the high temperature combustion gas discharged from the combustor is led into the heat exchanger for heating the air discharged from the compressor and is then discharged outside of the system.
(2) A gas turbine system as mentioned in the invention (1) above, characterized in that a fuel supply system of the combustor is supplied with fuel with no pressure elevating means of the fuel being used.
(3) A gas turbine system as mentioned in the invention (1) above, characterized in that an operating pressure of the combustor is 2 ata or less.
(4) A gas turbine system as mentioned in the invention (1) above, characterized in that the heat exchanger comprises an air system through which the air discharged from the turbine is led directly into the heat exchanger and the air system coming out of the heat exchanger joins a discharge system of the high temperature combustion gas.

In the invention (1), the air compressed at the compressor is heat-exchanged with the high temperature combustion gas at the heat exchanger to be heated. The heated air enters the turbine to work to rotate the generator. The air coming out of the turbine enters the combustor and the fuel supplied into the combustor is burned. The high temperature combustion gas generated at the combustor enters the heat exchanger to heat the air compressed at the compressor and is then discharged outside of the system via a discharge passage.

In the mentioned invention (1), the expensive and less reliable fuel gas compressor as has been conventionally used is not used and hence a compression power or pressure elevation power becomes unnecessary and the thermal efficiency of the gas turbine system is enhanced by that degree. Also, the turbine is operated not by the high temperature combustion gas but by the air of a lower temperature and thereby the inlet air temperature of the turbine can be made lower as compared with the conventional case, so that the life of the turbine and ancillary equipment, such as duct, can be elongated. Also, the inlet air temperature of the turbine being lower, the combustion gas temperature can be made lower, the operating pressure of the combustor can be made lower and NOx generation amount can be lowered remarkably as compared with the conventional case. Further, the system being made simplified, the combustor and the heat exchanger can be made integrated so that the entire system may be made compact and a cost reduction may be realized.

In the invention (2), there is needed no pressure elevating means in the fuel supply system of the combustor, as the pressure in the fuel supply system is low. Also, in the invention (3), the operation pressure of the combustor can be made as low as 2 ata or less and there is needed no pressure elevating means of the fuel, so that a safety is enhanced, the device is made simplified and the reliability of the invention (1) can be further enhanced.

In the invention (4), there is added to the heat exchanger the air system for passing therein the exhaust air of the turbine which bypasses the combustor and thereby the heat exchanger has a function to adjust the heating of the air coming from the compressor and output of the turbine becomes adjustable as well.

### BRIEF DESCRIPTION OF THE DRAWINGS

Fig. 1 is a diagram of a gas turbine system of a first embodiment according to the present invention.
Fig. 2 is a diagram of a gas turbine system of a second embodiment according to the present invention.
Fig. 3 is a diagram of a microturbine system in the prior art.

### DESCRIPTION OF THE PREFERRED EMBODIMENTS

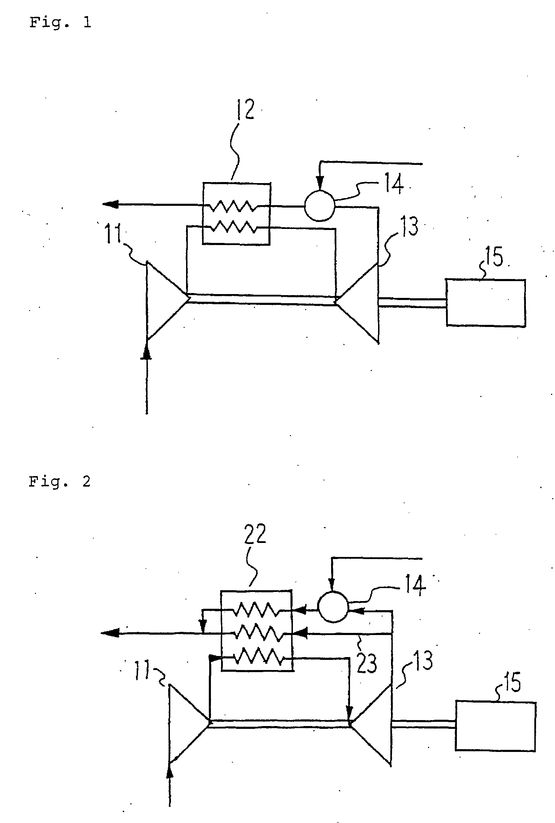

Herebelow, embodiments according to the present invention will be described concretely with reference to figures. Fig. 1 is a diagram of a gas turbine system of a first embodiment according to the present invention. In Fig. 1, numeral 11 designates a compressor for compressing air. Numeral 12 designates a heat exchanger for heating compressed air coming from the compressor 11. Numeral 13 designates a turbine and numeral 14 designates a combustor for burning fuel with exhaust air coming from the turbine 13. Numeral 15 designates a generator, which is connected directly to the turbine 13 to be rotated by the turbine 13 for power generation. This gas turbine system is of a comparatively small type of 25 to 100 kw class to be used mainly for a power source or waste heat utilizing source in a store, building or the like.

In the gas turbine system of the present first embodiment constructed as above, the air compressed at the compressor 11 to be of a temperature of about 200°C flows into the heat exchanger 12 to be heat-exchanged with combustion gas, described below, to be heated to about 760 to 900°C. This air of about 760 to 900°C flows into the turbine 13 and expands to work to rotate the generator 15 for power generation. The air having so expanded to be of a temperature of about 500 to 750°C as exhaust air comes out of the turbine 13 to enter the combustor 14.

The fuel supplied into the combustor 14 burns with the exhaust air coming from the turbine 13 at a low pressure of about 1 atg (2 ata) or less in the combustor 14 to become a high temperature combustion gas of about 800 to 950°C. This high temperature combustion gas enters the heat exchanger 12 to be heat-exchanged with the air discharged from the compressor 11 so as to heat this air, as mentioned above. Then, the combustion gas having so heated the air is discharged outside of the system.

According to the gas turbine system of the present first embodiment as described above, the fuel gas compressor 36 in the prior art, which is expensive and yet of a less reliability, or a pressure elevating device to be used in place thereof, becomes unnecessary, so that a fuel compressing power or pressure elevating power becomes unnecessary, the thermal efficiency of the gas turbine system is enhanced by that degree and a cost reduction can be realized.

Because of a limitation in the heat resisting temperature of the heat exchanger 12, outlet air of the heat exchanger 12 cannot be heated to an excessively high temperature. For this reason, inlet air temperature of the turbine 13 is suppressed to about 760 to 900°C, which is lower than inlet gas temperature of about 900 to 950°C of the microturbine 33 in the prior art. Hence, not only the heat exchanger 12 but also other high temperature components, such as the combustor 14, the turbine 13, a duct connecting the turbine 13 and the combustor 14 and a scroll device for distributing the combustion gas between the combustor 14 and the heat exchanger 12, can be operated at the lower temperature and the life of these components is elongated remarkably.

Also, the combustor 14 can be provided closely to the heat exchanger 12 so as to be integrated together and thereby a high temperature duct through which the high temperature combustion gas discharged from the combustor 14 flows can be shortened or eliminated.

Further, outlet gas temperature of the combustor 14 can be made lower and operating pressure of the combustor 14 also can be lowered to about 1 to 2 ata as compared with the conventional pressure of 5 ata and thereby the NOx generation amount can be lowered to about 1/2 to 1/3 as compared with the conventional case. Moreover, pressure of the fuel system is low and thereby a safety can be enhanced.

Fig. 2 is a diagram of a gas turbine system of a second embodiment according to the present invention. A featured portion of the present second embodiment is a heat exchanger 22 comprising an air system 23 and other portions thereof are same as those of the first embodiment shown in Fig. 1.

That is, each of the components of the compressor 11, the turbine 13, the combustor 14 and the generator 15 and connecting systems of these components are same as those shown in Fig. 1. In addition thereto, in the present embodiment, the air system 23 is provided for leading a portion of the exhaust air from the turbine 13 to the heat exchanger 22 directly, so that temperature of discharge air from the compressor 11 becomes adjustable when this discharge air is heated at the heat exchanger 22.

In the present second embodiment constructed as above, the air compressed at the compressor 11 to be of a temperature of about 200°C flows into the heat exchanger 22 to be heat-exchanged with combustion gas from the combustor 14 and the exhaust air from the turbine 13 to be heated to about 760 to 900°C. This heated air flows into the turbine 13 and expands to work to rotate the generator 15 for power generation. The exhaust air of about 500 to 750°C, after expansion, coming out of the turbine 13 is partially supplied into the combustor 14 and the remaining portion is supplied directly into the heat exchanger 22 via the air system 23.

Fuel supplied into the combustor 14 burns together with the exhaust air from the turbine 13 at a low pressure of about 1 atg (2 ata) or less in the combustor 14, so that a high temperature combustion gas of about 800 to 950°C is generated to be supplied into the heat exchanger 22. In the heat exchanger 22, the high temperature combustion gas of about 800 to 950°C from the combustor 14 and the exhaust air of about 500 to 750°C flowing in the air system 23 are heat-exchanged with the discharge air from the compressor 11 so that the discharge air from the compressor 11 is heated. The high temperature combustion gas and the exhaust air in the air system 23, both after used for heating the air, join together to be discharged outside of the system.

In the gas turbine system of the present second embodiment, the same effect as in the first embodiment shown in Fig. 1 can be obtained. Also, in addition thereto, the exhaust air coming from the turbine 13, by-passing the combustor 14, can be adjusted in the volume by the air system 23 and, at the same time, the high temperature combustion gas coming into the heat exchanger 22 can be adjusted in the volume. Hence, heat input to the discharge air coming from the compressor 11 can be adjusted and thereby the output of the turbine 13 can be adjusted.

While the preferred form of the present invention has been described, it is to be understood that the invention is not confined to the particular construction and arrangement herein illustrated and described but embraces such modified forms thereof as come within the scope of the appended claims.

## Claims

1. A gas turbine system **characterized in** comprising a compressor (11) for compressing air; a heat exchanger (12) for heating the air discharged from said compressor (11); a turbine (13) driven by expansion of the air discharged from said compressor (11) and heated at said heat exchanger (12) for working to rotate a generator (15); a combustor (14) for burning fuel with the air discharged from said turbine (13) for generating a high temperature combustion gas; and a system in which the high temperature combustion gas discharged from said combustor (14) is led into said heat exchanger (12) for heating the air discharged from said compressor (11) and is then discharged outside of the system.

2. A gas turbine system as claimed in Claim 1, **characterized in that** a fuel supply system of said combustor (14) is supplied with fuel with no pressure elevating means of the fuel being used.

3. A gas turbine system as claimed in Claim 1, **characterized in that** an operating pressure of said combustor (14) is 2 ata or less.

4. A gas turbine system as claimed in Claim 1, **characterized in that** said heat exchanger (22) comprises an air system (23) through which the air discharged from said turbine (13) is led directly into said heat exchanger (22) and said air system (23) coming out of said heat exchanger (22) joins a discharge system of said high temperature combustion gas.
